# EUROPÄISCHE PATENTSCHRIFT

(11) **EP 0 887 874 B1**
(45) Veröffentlichungstag und Bekanntmachung des Hinweises auf die Patenterteilung: **22.09.2010**
(21) Anmeldenummer: 98110601.6
(22) Anmeldetag: 10.06.1998
(51) Int. Cl.: H01M 6/16, H01M 10/0567, H01M 10/052

(54) **Elektrolytsystem für Lithiumbatterien und dessen Verwendung sowie Verfahren zur Erhöhung der Sicherheit von Lithiumbatterien**
Electrolyte for lithium batteries and its use, and method for increasing the safety of lithium batteries
Electrolyte pour piles au lithium et son utilisation, et méthode pour augmenter la sécurité des piles au lithium

(30) Priorität: 13.06.1997 DE 19724709
(43) Veröffentlichungstag der Anmeldung: 30.12.1998
(73) Patentinhaber: Solvay Fluor GmbH, 30173 Hannover (DE)
(72) Erfinder: Appel, Wolfgang, Dr., 65779 Kelkheim (DE); Pasenok, Sergej, Dr., 65779 Kelkheim (DE)
(74) Vertreter: Jacques, Philippe

(56) Entgegenhaltungen:
- EP-A- 0 599 534
- EP-A- 0 631 339

## Beschreibung

Die Erfindung betrifft Elektrolytsysteme für Lithiumbatterien mit erhöhter Sicherheit, die wenigstens ein Lithium enthaltendes Leitsalz sowie wenigstens eine Elektrolytflüssigkeit aufweisen und deren Verwendung sowie ein Verfahren zur Steigerung der Sicherheit von Lithiumbatterien.

Tragbare hochwertige elektronische Geräte wie Mobiltelefone, Laptop-Computer, Camcorder etc. erfreuen sich eines extrem schnell wachsenden Marktes. Die adäquate elektrische Versorgung dieser Geräte erfordert leichte Stromquellen von hoher Kapazität und Qualität. Aus Gründen des Umweltschutzes und der Wirtschaftlichkeit finden ganz überwiegend sekundäre, wiederaufladbare Batterien Verwendung. Hier konkurrieren im Wesentlichen drei Systeme: Nickel-Cadmium, Nickel-Metallhydrid und Lithium-Ionen Batterien. Ein weiteres interessantes Gebiet für dieses Batteriesystem könnte der Einsatz in elektrisch betriebenen Fahrzeugen sein.

Wegen ihrer herausragenden Leistungscharakteristik hat die Lithiumbatterie bereits große Marktanteile erworben, obwohl sie in der aktuellen Technik erst in 1994 auf den Markt gebracht wurde. Trotz dieses Siegeszuges der sekundären Lithiumbatterie darf nicht übersehen werden, daß sie unter dem Sicherheitsaspekt problematisch ist:

Die wiederaufladbaren Lithiumbatterien enthalten meist eine Verbindung aus Lithiumoxid und einem Metalloxid als Kathode (zum Beispiel LiₓMnO₂ oder LiₓCoO₂) und Lithiummetall als Anode, wobei das Lithium bevorzugt als Intercalationsverbindung mit Graphit oder mit Kohle- oder Graphitfasern verwendet wird. Ein Überblick über die Verwendung solcher Batterien wird von K. Brandt gegeben ( Solid state ionics 69 (1994), 173-183, Elsevier Science B.V.).

Als Elektrolytflüssigkeiten zur Erzielung hoher Leitfähigkeiten verwendet man nach derzeitigem Stand der Technik bevorzugt Lösungsmittelgemische von mindestens zwei oder auch mehr Komponenten. Das Gemisch muß mindestens eine stark polare Komponente enthalten, die aufgrund ihrer Polarität auf Salze stark dissoziierend wirkt. Als solche polare Komponenten finden im allgemeinen Ethylencarbonat oder Propylencarbonat Verwendung. Diese hochpolaren Lösungsmittel sind relativ viskos und haben meistens relativ hohe Schmelzpunkte, z.B. 35°C für Ethylencarbonat. Um eine ausreichende Leitfähigkeit auch bei niedrigeren Einsatztemperaturen zu gewährleisten, setzt man daher im allgemeinen noch eine oder mehrere niederviskose Komponenten als "Verdünner" zu. Typische Verdünner sind zum Beispiel 1,2-Dimethoxyethan, Dimethylcarbonat oder Diethylcarbonat. Üblicherweise werden die Verdünner in einem Anteil von 40-60% vom Gesamtvolumen zugesetzt. Ein gravierender Nachteil dieser Verdünner-Komponenten liegt in ihrer hohen Flüchtigkeit und den niedrigen Flammpunkten: 1,2-Dimethoxyethan : Sdp. 85°C, Fla.p. -6°C und Explosionsgrenze zwischen 1,6 und 10,4 Vol. %; Dimethylcarbonat: Sdp. 90°C, Fla.p. 18°C. Für diese "Verdünner" gibt es zur Zeit keine gleichwertigen Ersatzstoffe.

Da bei elektrochemischer Anwendung von Elektrolytlösungen und in noch weit stärkerem Maße beim Auftreten von Fehlern (Kurzschluß, Überladen etc.) stets eine Erwärmung eintritt, bedeutet dies - insbesondere beim Aufplatzen der Zelle und Austreten von Lösungsmittel - das Risiko der Entzündung mit den entsprechenden schwerwiegenden Folgen. Dies wird bei den derzeit eingesetzten Systemen durch aufwendige elektronische Regelungen im Prinzip vermieden. Dennoch sind einige Unfälle durch Brände bei Herstellung und Nutzung von wiederaufladbaren Lithiumbatterien bekannt geworden.

Zu einer ungleich größeren Gefahrenquelle würde dies im Falle von Elektrofahrzeugen. Hier werden wesentlich größere Mengen Elektrolytflüssigkeit pro Energiespeicher benötigt und das elektronische Management zahlreicher zusammengeschalteter Zellen ist ungleich schwieriger und beinhaltet entsprechend höhere Risiken.

Zur Erhöhung der Sicherheit können Kathoden und Anodenraum durch eine mikroporöse Separatormembran getrennt werden, die so beschaffen ist, daß beim Überschreiten einer bestimmten Grenztemperatur durch Verschmelzen der Poren der Stromfluß unterbrochen wird. Geeignete Membranen dieser Art finden sich zum Beispiel im ^{®}Celgard-Sortiment der Hoechst Celanese Corporation.

Weiterhin kann durch Überdrucksicherungen, die auf Gasentwicklung beim Überladen reagieren, und wie bereits erwähnt durch Überwachungs- und Regelelektronik die Sicherheit von Lithiumbatterien erhöht werden.

Weiter werden auch flammhemmende phosphor- und halogenhaltige Zusätze empfohlen, die sich allerdings häufig negativ auf die Leistungscharakteristik der Batterien auswirken.

All diese Maßnahmen können jedoch nicht ausschließen, daß bei Betriebsstörungen der leichtflüchtige und leichtentzündliche "Verdünner" letztlich doch entflammt und nach Ruptur der Zelle ein mit gängigen Löschmitteln kaum mehr beherrschbares Feuer entsteht. Brennendes Lithium reagiert nicht nur mit Wasser, sondern auch mit Kohlendioxid sehr heftig.

Zum speziellen Stand der Technik werden die Druckschriften
JP-A-7-249432 = D1,
EP-A-0 631339 = D2,
EP-A-0 599534 = D3, EP-A-0 575591 = D4,
US-A-5 169736 = D5,
B. Scrosati, Hrsg., 2nd International Symposium on Polymer Electrolytes, Elsevier, London und New York (1990) = D6,
US-A-5 393621 = D7 und
JP-A-06020719 = D8
genannt.

Beispielsweise in D1 und D2 werden hochfluorierte Ether als Elektrolytlösungsmittel oder als Zusätze zu anderen Elektrolyten vorgeschlagen. Diese sind im allgemeinen thermisch und chemisch sehr stabil und haben hohe Flammpunkte. Sie haben jedoch einerseits ein viel zu geringes Lösevermögen für die erforderlichen Lithiumelektrolytsalze, um allein verwendet zu werden und sind andererseits mit den üblichen Batterielösungsmitteln zu schlecht mischbar.

Teilfluorierte Carbonate sind ebenfalls als Elektrolyte mit erhöhtem Flammpunkt beschrieben (D3). Problematisch ist hier jedoch, daß die aufgrund niedriger Viskosität geeignet erscheinenden Verbindungen nur einen mäßig erhöhten Flammpunkt (37°C) aufweisen und die elektrischen Leitfähigkeiten deutlich unter dem Stand der Technik liegen (Annahme: Messungen erfolgten bei Raumtemperatur, keine Temperatur spezifiziert).

Carbamate sind ebenfalls als Verdünner für wasserfreie Elektrolyte beschrieben (D4). Sie weisen zwar gegenüber den derzeit verwendeten Verdünnern höhere Siedepunkte auf, jedoch kaum verbesserte Flammpunkte.

D8 offenbart als Elektrolyte für sekundäre Lithiumbatterien Esterverbindungen der Formel R¹COOR², worin wenigstens einer der Reste R¹ und R² eine Fluorsubstitution aufweist. Bevorzugte Verbindung ist Trifluoressigsäuremethylester. Allerdings hat diese Verbindung einen Siedepunkt von nur 43°C sowie einen Flammpunkt von -7°C, was für den Fall einer Beschädigung ein hohes Sicherheitsrisiko darstellt.

Nach dem gegenwärtigen Stand der Technik wird verminderte Entflammbarkeit der Elektrolytlösung vor allem durch Viskositätserhöhung der Elektrolytlösung durch Bindemittel oder Füller beziehungsweise durch die Verwendung bei Raumtemperatur praktisch fester polymerer Elektrolyte erreicht.

In der D5 werden zum Beispiel organische oder anorganische Verdickungsmittel (Polyethylenoxid, SiO₂, Al₂O₃ und andere) beschrieben, um flüssige Elektrolytlösungen zu verfestigen.

Polymere Elektrolyte auf der Basis von Makromolekülen mit zahlreichen polaren Gruppen wie etwa Polyethylenoxide, wie sie etwa aus der D6 bekannt sind, sind ebenfalls aufgrund ihrer geringen Flüchtigkeit weitaus schwerer entflammbar.

In der D7 werden polymere Elektrolyte beschrieben, deren polare Makromoleküle durch Polymerisation von Organophosphorverbindungen gebildet werden, welche sich durch besonders geringe Entflammbarkeit auszeichnen.

All diesen gelartigen bis festen Elektrolyten ist gemeinsam, daß aufgrund ihrer hohen Viskosität die Beweglichkeit der Ionen der in ihnen gelösten Salze weitaus geringer ist als in flüssigen Elektrolytlösungen, so daß insbesondere bei tieferen Temperaturen zumindest für die meisten technischen Anwendungen nicht mehr die erforderlichen Leitfähigkeiten erreicht werden. Aus diesem Grunde haben zum Beispiel Alkalimetallbatterien mit polymeren Elektrolyten trotz jahrzehntelanger sehr intensiver Forschungstätigkeit noch immer keine wirtschaftliche Bedeutung erlangen können.

Angesichts des hierin angegebenen und diskutierten Standes der Technik war es mithin Aufgabe der Erfindung, neue Elektrolytlösungsmittel zur Verfügung zu stellen, die chemisch und physikalisch stabil sind, mit anderen geeigneten Lösungsmitteln ausreichend mischbar sind, Lithium-Leitsalze ausreichend lösen und einen deutlich erhöhten Flammpunkt aufweisen, aber dennoch ein Viskositäts- und Leitfähigkeitsverhalten zeigen, das sie für den praktischen Einsatz auch bei tiefen Temperaturen geeignet macht.

Gelöst werden diese sowie weitere nicht näher angegebene Aufgaben durch ein Elektrolytsystem der eingangs erwähnten Art, welches die Merkmale des kennzeichnenden Teils des Anspruches 1 aufweist. Vorteilhafte Abwandlungen des erfindungsgemäßen Elektrolytsystems werden in den abhängigen Produktansprüchen unter Schutz gestellt. Im Hinblick auf das Verfahren zur Erhöhung der Sicherheit von Lithiumbatterien gibt der Gegenstand des Anspruchs eine Lösung des der Erfindung zugrundeliegenden Problems an. Zweckmäßige Modifikationen des Verfahrens der Erfindung werden in den von Anspruch 1 abhängigen Unteransprüchen unter Schutz gestellt.

Dadurch, daß das Elektrolytsystem für Lithiumbatterien einen wirksamen Gehalt an mindestens einem teilfluorierten Carbamat der allgemeinen Formel (I) 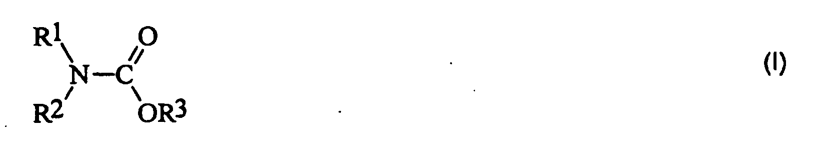 worin
- R¹ und R²: unabhängig voneinander gleich oder verschieden , linear C₁- C₆-Alkyl, verzweigt C₃-C₆-Alkyl,- C₃-C₇-Cycloalkyl oder
- R¹ und R²: direkt oder über ein oder mehrere zusätzliche N- und/oder O-Atome zu einem Ring mit 3 bis 7 Ringgliedern verbunden sind, wobei gegebenenfalls im Ring vorhandene zusätzliche N-Atome mit C₁-C₃-Alkyl abgesättigt sind und auch die Ring- kohlenstoffe C₁-C₃-Alkyl tragen können, wobei in den Resten R¹ und R² ein oder mehrere Wasser- stoffatome durch Fluoratome ersetzt sein können,
- R³: eine teil- oder perfluorierte geradkettige Alkylgruppe mit 1 bis 6 C-Atomen, eine teil- oder perfluorierte verzweigte Alkylgruppe mit 3 bis 6 C-Atomen oder eine teilfluorierte Cycloalkylgruppe mit 3 bis 7 C-Atomen, die gegebenenfalls ein oder mehrfach mit C₁-C₆-Alkyl substituiert sein kann, ist,
aufweist, gelingt es auf besonders vorteilhafte und nicht ohne weiteres vorhersehbare Weise, einen Elektrolyten bereitzustellen, welcher die bekannten Elektrolytsysteme für Lithiumbatterien im üblichen Anforderungsspektrum übertrifft oder ihnen zumindest gleichwertig ist und zugleich eine erhöhte Sicherheit gegenüber den vorbekannten Systemen ermöglicht.

Insbesondere wurde überraschend gefunden, daß Elektrolytsysteme für Lithiumbatterien mit einem Zusatz an teilfluoriertem Carbamat der allgemeinen Formel I folgende Anforderungen in sehr gutem bis herausragendem Maße erfüllen:
1. Hohe thermische Stabilität;
2. hoher Flammpunkt;
3. niedriger Dampfdruck;
4. hoher Siedepunkt;
5. niedrige Viskosität;
6. Gute Mischbarkeit mit batterieüblichen Lösungsmitteln, insbesondere mit Ethylencarbonat, Propylencarbonat oder α,ω-Dialkyl-glykolethern;
7. gutes Lösevermögen für Lithiumleitsalze, beispielsweise LiClO₄;
8. gutes Lösevermögen für fluorhaltige Lithiumleitsalze, beispielsweise LiPF₆, LiN(SO₂CF₃)₂ oder LiC(SO₂CF₃)₃;
9. gutes elektrisches Leitvermögen ihrer Lösungen von Elektrolytsalzen über einen weiten Temperaturbereich;
10. hohe Stabilität gegenüber metallischem Lithium;
11. hohe Zersetzungsspannung;
12. gutes Lösevermögen für Kohlendioxid: CO₂ beschleunigt den Aufbau von Schutzfilmen auf Lithium und LiCₙ-Anoden;
13. gutes Lösevermögen für SO₂: dies verbessert die Leitfähigkeit über den gesamten Temperaturbereich und den Aufbau von Schutzfilmen auf den Elektroden.
14. eine ungewöhnliche Toleranz für initialen Feuchtigkeitsgehalt. So wurden selbst bei Wassergehalten des Elektolyten bis zu 10.000 ppm noch gute Elektrodenschutzfilme aufgebaut und stabile Elektrolytsysteme erhalten.

Die Bezeichnung "linear C₁-C₆-Alkyl" oder "geradkettige Alkylgruppe mit 1 bis 6 Kohlenstoffatomen" umfaßt die Reste Methyl, Ethyl, n-Propyl, n-Butyl und n-Hexyl;

Die Bezeichnung "verzweigt C₃-C₆-Alkyl" oder "verzweigte Alkylgruppe mit 1 bis 6 Kohlenstoffatomen" umfaßt die Reste Isopropyl, Isobutyl (2-Methylpropyl), sek.-Butyl (1-Methylpropyl), tert.-Butyl (1,1-Dimethylethyl), 1-Methylbutyl, 2-Methylbutyl, Isopentyl (3-Methylbutyl), 1,2-Dimethylpropyl, tert.-Pentyl (1,1-Dimethylpropyl), 2,2-Dimethylpropyl, 3,3-Dimethylpropyl, 1-Ethylpropyl, 2-Ethylpropyl, sowie die verzweigten Hexyle, insbesondere unter anderem 1-Methylpentyl, 2-Methylpentyl, 3-Methylpentyl, 4-Methylpentyl, 1,1-Dimethylbutyl, 2,2-Dimethylbutyl, 3,3-Dimethylbutyl, 1,2-Dimethylbutyl, 1,3-Dimethylbutyl, 2,3-Dimethylbutyl, 1-Ethylbutyl, 2-Ethylbutyl, 3-Ethylbutyl, 1,1,2-Trimethylpropyl, 1,2,2-Trimethylpropyl, 1-Methyl-1-Ethylpropyl, 1-Ethyl-2-methylpropyl;

Die Bezeichnung "C₃-C₇-Cycloalkyl" umfaßt Cyclopropyl, Cyclobutyl, Cyclopentyl, Cyclohexyl, Cycloheptyl;

"C₁-C₆-Alkyl", ohne die Angabe linear oder verzweigt, umfaßt grundsätzlich sowohl linerare als auch verzweigte Reste, bevorzugt die linearen Reste;

"direkt zu einem Ring mit 3 bis 7 Ringgliedern verbundene Reste R¹ und R²" bedeuten vor allem Aziridinyl, Azetidinyl, Pyrrolidinyl, Piperidinyl, Azepanyl;

"über ein oder mehrere zusätzliche N- und/oder O-Atome zu einem Ring mit 3 bis 7 Ringgliedern verbundene Reste R¹ und R²" bedeuten beispielsweise Oxaziridinyl, Diaziridinyl, 1.3-Oxazetidinyl, 1.3-Diazetidinyl, Oxazolidinyl, Diazolidinyl, Morpholinyl (Tetrahydro-1.4-oxazinyl), Tetrahydro-1.4-diazinyl;

Teilfluorierte Verbindungen oder Reste bedeuten im Rahmen der Erfindung. Verbindungen oder Reste, in welchen wenigstens eines aber nicht alle der mit Kohlenstoff verbundenen Wasserstoffatome der jeweiligen Verbindung oder des jeweiligen Restes durch Fluor ersetzt ist.

Perfluorierte Verbindungen oder Reste sind im Rahmen der Erfindung Verbindungen oder Reste, in denen alle mit Kohlenstoff verbundenen Wasserstoffatome der Verbindung oder des Restes durch Fluor ersetzt sind.

Die erfindungsgemäßen Elektrolytsysteme für Lithiumbatterien mit erhöhter Sicherheit, die wenigstens ein Lithium enthaltendes Leitsalz sowie wenigstens eine Elektrolytflüssigkeit aufweisen beinhalten "einen wirksamen Gehalt" an einer oder mehreren Verbindungen der allgemeinen Formel I. Hierunter wird im Rahmen der Erfindung eine Menge an teil- oder perfluoriertem Carbamat der Formel I verstanden, die zur Konstruktion einer gebrauchs- und funktionsfähigen sekundären Lithiumbatterie ausreichend ist.

Grundsätzlich handelt es sich in der Erfindung um Verbindungen, die sich dadurch auszeichnen, daß ein dreifach Alkylsubstituiertes Carbamat vorliegt, in welchem vor allem der am Sauerstoff befindliche Rest ein oder mehrere Fluoratome enthält.

Von den Verbindungen der allgemeinen Formel I sind unter anderem solche Verbindungen von besonderem Interesse, bei denen in der Formel I R¹ und R² linear C₁-C₄-Alkyl, verzweigt C₃-C₄-Alkyl, Cyclopropyl, Cyclobutyl, wobei ein oder mehrere Wasserstoffatome durch Fluoratome ersetzt sein können, bedeutet.

Sofern die Reste R¹ und R² zu einem Ring zusammengeschlossen sind, enthält dieser Zyklus wenigstens ein Stickstoffatom und ist voll gesättigt. Dabei sind R¹, R² also über Methylengruppen -(CH₂)ₙ- zum Ring geschlossen, wobei n eine ganze Zahl zwischen 2 und 5 ist. Hierbei können sich am Ring C₁-C₃-Alkylsubstituenten befinden, der Ring kann Sauerstoff oder C₁-C₃-Alkyl-substituierte Stickstoffatome enthalten, wie zum Beispiel in -(CH₂)ₘ-O-(CH₂)ₚ- oder in -(CH₂)ₘ-N(Alkyl)-(CH₂)ₚ- mit m,p = 1, 2 oder 3. Außerdem können ein oder mehrere H-Atome durch Fluor ersetzt sein.

Besonders zweckmäßige Elektrolytsysteme ergeben sich, wenn Verbindungen der Formel I im System enthalten sind, bei denen die Reste R¹ und R² direkt oder über ein zusätzliches N- oder O-Atom zu einem Ring mit 5 oder 6 Ringgliedern verbunden sind

Ein Elektrolytsystem mit herausragender Leistungscharakterisik resultiert auch beim Gehalt an einer oder mehreren der Verbindungen I, worin R³ eine teil- oder perfluorierte geradkettige Alkylgruppe mit 1 bis 4 C-Atomen oder eine teil- oder perfluorierte verzweigte Alkylgruppe mit 3 oder 4 C-Atomen ist.

In noch einer vorteilhaften Ausführungsform kennzeichnet sich ein Elektrolytsystem dadurch, daß Verbindungen der Formel I in ihm enthalten sind, worin der Rest R³ die Zusammensetzung CₙH₂ₙ₊₁₋ₘFₘ, mit n = 1 bis 6 und m = 1 bis 13 aufweist.

Die erfindungsgemäße Lösung des Sicherheitsproblems von sekundären Lithiumbatterien wird durch den Einsatz von Verbindungen der Formel I als wesentliche Komponente des Elektrolytsystems erreicht, wobei man sich unter anderem auch ihre vergleichsweise günstige Viskosität zunutze macht.

Die Stoffe der allgemeinen Formel I lassen sich als Verdünnungsmittel für schwerentflammbare, hochviskose Komponenten verwenden, beispielsweise Ethylencarbonat und Propylencarbonat. Auf diese Weise lassen sich aprotische Elektrolytsysteme herstellen, die praktisch kaum noch entflammbar sind.

In einer besonderen Ausführungsform der Erfindung beträgt der Gehalt von Carbamaten der Formel (I) 5 bis 100, vorzugsweise 20 bis 70, Vol.-% , bezogen auf das gesamte Volumen des Elektrolytsystems. D. h., daß Carbamate der Formel (I) alleiniges Löse- und Verdünnungsmittel einer sekundären Lithiumbatterie sein können.

Die Verbindungen gemäß Formel I in reiner Form können jedoch nicht nur allein als Sicherheitselektrolytflüssigkeiten für nicht-wäßrige Batteriesysteme dienen, sie können auch in Kombination mit bekannten Elektrolytflüssigkeiten wie Carbonaten, Estern, Lactonen, Nitrilen und dergleichen als Elektrolytflüssigkeitensysteme oder - kombinationen eingesetzt werden oder zur zusätzlichen Erhöhung der Leitfähigkeit über den gesamten Temperaturbereich und noch weiteren Verbesserung der Schutzfilmbildung an den Elektroden bestimmte Zusätze (beispielsweise bestimmte Gase) aufweisen.

Liegt der Anteil der erfindungsgemäß einzusetzenden Carbamate der Formel I am Elektrolytsystem einer sekundären Lithiumbatterie unter 5 Vol.-%, treten die hierin oben erwähnten Vorteile 1 bis 14 nicht so ausgeprägt hervor. Üblicherweise liegt der Gehalt bei 5 bis 70.-Vol.-%, vorzugsweise 20 bis 50 Vol.-%, bezogen auf das Gesamtvolumen des Elektrolytsystems.

Aufgrund der obigen Erläuterungen handelt es sich ebenfalls um sehr zweckmäßige Abwandlungen der erfindungsgemäßen Elektrolytsysteme wenn neben dem Gehalt an mindestens einem Carbamat der allgemeinen Formel (I) ein zusätzlicher Gehalt an Ethylencarbonat und/oder Propylencarbonat enthalten ist. Vorzugsweise ist dann neben dem Leitsalz keine weitere Komponente im Elektrolytsystem enthalten.

Die teil- oder perfluorierten Carbamate gemäß der Formel I verbessern auch das Lösungsvermögen für unpolare oder wenig polare Gase, insbesondere CO₂, N₂, N₂O, SF₆, SO₂FCI oder SO₂F₂. Diese Gase können vorteilhaft als Schutzgas in Lithiumbatterien eingesetzt werden, da sie einen positiven Effekt auf die an der Grenzfläche Elektrode/Elektrolyt ablaufenden Reaktionen haben [vgl.J.O. Besenhard et. al., J. Power Sources, 44 (1993), 413].

Von besonderem Interesse sind erfindungsgemäße Elektrolytsysteme für sekundäre Lithiumbatterien, worin SO₂ oder CO₂ als Schutzgas zum Einsatz kommen, respektive solche Systeme, die mit SO₂ oder CO₂ gesättigt sind. Hierdurch wird eine ausgesprochen vorteilhafte Schutzfilmbildung an den Elektroden unterstützt.

Besonders zweckmäßige Systeme ergeben sich auch, wenn sie aus den Komponenten Leitsalz, teil- oder perfluoriertes Carbamat der allgemeinen Formel I, Ethylen- und/oder Propylencarbonat und SO₂ oder CO₂ bestehen.

Die Verbindungen der Formel I sind in einigen Fällen kommerziell erhältlich, lassen sich zum Teil nach literaturbekannten Verfahren synthetisieren oder teilweise auch nach modifizierten Literaturverfahren herstellen und sind damit verfügbar. Mit der Erfindung wird auch eine Route zu bestimmten Verbindungen der Formel angegeben.

Carbamate lassen sich im allgemeinen in einer zweistufigen Synthese herstellen. Dabei kann zunächst ein Alkohol mit Phosgen zum entsprechenden Chlorameisensäureester umgesetzt werden, der dann in einem zweiten Schritt mit einem primären oder sekundären Amin zum Carbamat reagiert (Methode A).

Ebenso möglich ist die umgekehrte Vorgehensweise, bei der zunächst aus Phosgen und dem Amin das Carbaminsäurechlorid gebildet wird, das in der nächsten Stufe mit dem Alkohol zum Endprodukt abreagiert (Methode B).

Eine besondere Herstellungsvariante betrifft im Alkoholteil perfluorierte Carbamate. Hierzu wird das entsprechend der Methode B synthetisierte Carbaminsäurechlorid in Gegenwart von Cäsiumchlorid mit dem entsprechenden Perfluoralkanoylfluorid, z.B. Trifluoracetylfluorid, in einem inerten Lösungsmittel umgesetzt.

In der Tabelle 1 sind einige Beispiele für Herstellverfahren und physikalische Eigenschaften von Carbamaten zusammengefaßt.

Gegenstand der Erfindung sind auch sekundäre Lithiumbatterien mit erhöhter Sicherheit, die dadurch gekennzeichnet sind, daß sie ein erfindungsgemäßes Elektrolytsystem enthalten.

Es ist ferner bekannt, daß reaktive Verunreinigungen (zum Beispiel Wasser) schon in sehr geringen Konzentrationen drastische negative Auswirkungen auf die Funktion der Lithiumbatterien haben. In der Praxis sollte die Summe solcher Verunreinigungen 50 ppm möglichst nicht überschreiten. Ein großer Vorteil der durch die Formel definierten Verbindungen besteht darin, daß sie meist so hohe Siedepunkte haben, daß Wasser und andere reaktive Verunreinigungen leicht durch Destillation vollständig abgetrennt werden können.

Die Erfindung stellt auch ein Verfahren zur Erhöhung der Sicherheit einer sekundären Lithiumbatterie zur Verfügung, welches sich dadurch auszeichnet, daß man als Elektrolyt ein erfindungsgemäßes Elektrolytsystem einsetzt.

Schließlich ist Gegenstand der Erfindung auch die Verwendung von Verbindungen der allgemeinen Formel (I) Sicherheits-Elektrolytsystemen für Lithiumbatterien.

Die nachfolgenden Beispiele veranschaulichen den Gegenstand der Erfindung.

Zur Herstellung des Elektrolyten werden zuerst die verwendeten Lösungsmittelkomponenten wie folgt vorbereitet:

Ethylencarbonat (> 99 %, Firma Merck) wird im Ölpumpenvakuum destilliert (Siedepunkt 85 bis 95 °C) und über aktiviertem Molekularsieb (Firma Roth, Porenweite 4 Angström) bei 150 °C 3 Tage entwässert unter getrockneter Argonatmosphäre (Argon, 99, 996 %, Firma AGA, wurde zunächst, um Sauerstoffspuren zu entfernen, bei 150 °C über mit Argon W5 [Gemisch aus 95 % Argon und 5 % Wasserstoff, technische Reinheit, Firma AGA] reduziertes Kupfer-(I)-oxid [Firma BASF] geleitet und anschließend über aktiviertem Molekularsieb getrocknet) bei 60 °C gelagert.

Propylencarbonat (purum, Firma Aldrich) wird im Ölpumpenvakuum über eine 1,5 m lange, verspiegelte Füllkörperkolonne destilliert (Siedepunkt 64 bis 66 °C) und über aktiviertem Molekularsieb unter getrockneter Argonatmosphäre bei Raumtemperatur gelagert. Nach der Reinigung und Trocknung wird der Restwassergehalt der Lösungsmittel nach der Karl-Fischer-Methode (zum Beispiel mit dem automatischen Titriergerät Mitsubishi CA 05) bestimmt. Der Wassergehalt soll unter 10 ppm liegen.

Die fluorierte Lösungsmittelkomponente wird einige Tage über aktiviertem Molekularsieb unter getrockneter Argonantmosphäre bei Raumtemperatur getrocknet.

Die Herstellung der Elektrolytlösungen findet mit der sogenannten Schlenktechnik im getrockneten Argonstrom statt, wobei die verwendeten Glasgeräte mit Schutzgasanschluß vor Gebrauch in der entleuchteten Bunsenbrennerflamme unter mehrmaligem Wechsel von Argonspülung und Ölpumpenvakuumsog von anhaftender Feuchtigkeit befreit werden.

### Beispiel 1

### Herstellung eines Sicherheitsbatterie-Elektrolyten auf der Basis von 2,2,2-Trifluorethyl-N,N-dimethylcarbamat.

In 70 ml 2,2,2-Trifluorethyl-N,N-dimethylcarbamat werden 28,7 g Lithium-bis(trifluormethansulfon)-imid (0,01 mol)("Imid") gegeben und nach Erhalt einer klaren Lösung durch Zusatz des gleichen Lösungsmittels auf 100 ml aufgefüllt. Die Leitfähigkeit des so hergestellten Elektrolyten wurde von -60 bis +60°C gemessen. Ergebnisse siehe Tabelle 2

### Beispiel 2

### Herstellung eines Sicherheitsbatterie-Elektrolyten auf der Basis von 2,2,2-Trifluorethyl-N,N-dimethylcarbamat /Propylencarbonat (1:1).

In einer 1:1 (V/V) Mischung von 2,2,2-Trifluorethyl-N,N-dimethylcarbamat und Propylencarbonat (PC) werden 28,7 g Imid (0,1 mol) gelöst und anschließend durch Zusatz der gleichen Mischung auf 100 ml aufgefüllt. Die Leitfähigkeit dieses Elektrolyten wurde von -60 bis +60°C gemessen.

Die Ergebnisse sind in Tabelle 2 zu ersehen.

### Beispiel 3

### Herstellung eines Sicherheitsbatterie-Elektrolyten auf der Basis von 2,2,2-Trifluorethyl-N,N-dimethylcarbamat mit Lithiumhexafluorophosphat.

Die Herstellung des Elektrolyten erfolgte wie in Beispiel 1 mit dem Unterschied, daß als Elektrolytsalz LiPF₆ eingesetzt wurde. Die Leitfähigkeit dieses Elektrolyten wurde von -60 bis +60°C bestimmt.

Die Ergebnisse sind in Tabelle 2 dargestellt.

### Beispiel 4

### Herstellung eines Sicherheitsbatterie-Elektrolyten auf der Basis von 2,2,2-Trifluorethyl-N,N-dimethylcarbamat /Propylencarbonat mit Lithiumhexafluorophosphat.

Die Herstellung des Elektrolyten erfolgte wie in Beispiel 2 mit dem Unterschied, daß als Elektrolytsalz 0,1 mol LiPF₆ eingesetzt wurde. Die Leitfähigkeit dieses Elektrolyten wurde von -60 bis +60°C bestimmt.

Die Ergebnisse sind in Tabelle 2 zu ersehen.

### Beispiel 5

### Herstellung eines Sicherheitsbatterie-Elektrolyten auf der Basis von 2,2,2-Trifluorethyl-N,N-dimethylcarbamat mit Zusatz von Schwefeldioxidgas und Lithium-bis(trifluormethansulfon)-imid.

In 80 ml des mit SO₂-Gas gesättigten Carbamats wurden 28,7 g (0,1 mol) des Imids gelöst und anschließend mit weiterem SO₂-gesättigtem Carbamat auf 100 ml aufgefüllt. Die Leitfähigkeit des so erhaltenen Elektrolyten wurde von -60 bis +60°C bestimmt.

Die Ergebnisse sind in Tabelle 2 zu ersehen.

### Beispiel 6

### Herstellung eines Sicherheitsbatterie-Elektrolyten auf der Basis von 2,2,2-Trifluorethyl-N,N-dimethylcarbamat /Ethylencarbonat und Lithiumhexafluorophosphat.

Die Herstellung erfolgte wie in Beispiel 4, nur daß Ethylencarbonat anstelle von PC eingesetzt wurde. Die Leitfähigkeit des so erhaltenen Elektrolytgemisches wurde von -60 bis +60°C untersucht.

Die Ergebnisse sind in Tabelle 2 zu ersehen.

**Tabelle 2**

| Beispiel Nr. | Leitfähigkeit [mS/cm] | | | |
|---|---|---|---|---|
| | -10 [-C] | 0 [°C] | 25 [°C] | 40 [°C] |
| 1 | 1,2 | 1,8 | 2,9 | 3,6 |
| 2 | 1,9 | 2,7 | 5,1 | 7,1 |
| 3 | 1,2 | 1,7 | 2,8 | 3,5 |
| 4 | 2,0 | 2,8 | 5,6 | 8,0 |
| 5 | 2,3 | 2,8 | 4,1 | 4,7 |
| 6 | - | 3,1 | 6,7 | 9,4 |

Weitere Vorteile und Ausführungsformen der Erfindung ergeben sich aus den nachfolgenden Patentansprüchen.

**Tabelle 1**

| Verbindung | Methode | Siedep. °C | Fla.p. °C | Mischbarkeit¹⁾ (1:1) | | Stabilität gegen Lithium²⁾ | | Viskosität³ mm²/s (20°C) |
|---|---|---|---|---|---|---|---|---|
| | | | | PC | EC | 20°C | 80°C | |
| 2,2,2-Trifluorethyl-N,N-dimethylcarbamat | B | 138 | 85 | + | + | + | + | 1,0 |
| 2,2,2-Trifluorethyl-N,N-diethylcarbamat | A,B | 140 | 76 | + | + | + | + | 1,4 |
| 2,2,2-Trifluorethyl-N-piperidincarbamat | B | 181 | 107 | + | + | + | + | 2,3 |
| 2,2,2-Trifluorethyl-N-morpholincarbamat | B | 220 | > 110 | + | + | + | + | 6,8 |

| | | | | | | | | |
|---|---|---|---|---|---|---|---|---|
| 1) Mischbarkeit bei Raumtemperatur mit Propylencarbonat (PC) bzw. Ethylencarbonat (EC); 2) Metallisches Lithium bleibt blank, es tritt keine Reaktion ein;(20°C:72h, 80°C: 8h) 3) Automatisches Kapillarviskosimeter, AVS 310, Firma Schott Geräte; | | | | | | | | |

## Patentansprüche

1. Elektrolytsystem für Lithiumbatterien mit erhöhter Sicherheit aufweisend wenigstens ein Lithium enthaltendes Leitsalz sowie wenigstens eine Elektrolytflüssigkeit, **gekennzeichnet durch** einen wirksamen Gehalt an mindestens einem teilfluorierten Carbamat der allgemeinen Formel (I) 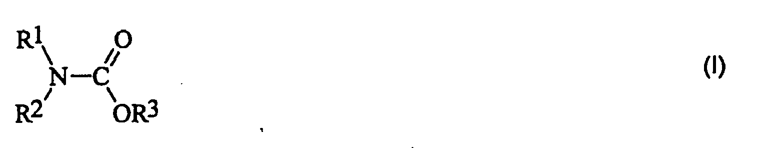 worin
R¹ und R² unabhängig voneinander gleich oder verschieden , linear C₁- C₆-Alkyl, verzweigt C₃-C₆-Alkyl, C₃-C₇-Cycloalkyl oder
R¹ und R² direkt oder über ein oder mehrere zusätzliche N- und/oder O-Atome zu einem Ring mit 3 bis 7 Ringgliedern verbunden sind, wobei gegebenenfalls im Ring vorhandene zusätzliche N-Atome mit C₁-C₃-Alkyl abgesättigt sind und auch die Ringkohlenstoffe C₁-C₃-Alkyl tragen können, wobei in den Resten R¹ und R² ein oder mehrere Wasserstoffatome **durch** Fluoratome ersetzt sein können,
R³ eine teil- oder perfluorierte geradkettige Alkylgruppe mit 1 bis 6 C-Atomen, eine teil- oder perfluorierte verzweigte Alkylgruppe mit 3 bis 6 C-Atomen oder eine teilfluorierte Cycloalkylgruppe mit 3 bis 7 C-Atomen ist, die gegebenenfalls ein oder mehrfach mit C₁-C₆-Alkyl substituiert sein kann.

2. Elektrolytsystem nach Anspruch 1, **dadurch gekennzeichnet, daß** in der Formel I R¹ und R² linear C₁-C₄-Alkyl, verzweigt C₃-C₄-Alkyl, Cyclopropyl, Cyclobutyl, wobei ein oder mehrere Wasserstoffatome durch Fluoratome ersetzt sein können, bedeutet.

3. Elektrolytsystem nach Anspruch 1, **dadurch gekennzeichnet, daß** in der Formel I die Reste R¹ und R² direkt oder über ein zusätzliches N- oder O-Atom zu einem Ring mit 5 oder 6 Ringgliedern verbunden sind.

4. Elektrolytsystem nach wenigstens einem der vorhergehenden Ansprüche, **dadurch gekennzeichnet, daß** R³ eine teil- oder perfluorierte geradkettige Alkylgruppe mit 1 bis 4 C-Atomen oder eine teil- oder perfluorierte verzweigte Alkylgruppe mit 3 oder 4 C-Atomen ist.

5. Elektrolytsystem nach einem oder mehreren der vorhergehenden Ansprüche 1 bis 4, **dadurch gekennzeichnet, daß** der Rest R³ die Zusammensetzung CₙH₂ₙ₊₁₋ₘFₘ, mit n = 1 bis 6 und m = 1 bis 13 aufweist.

6. Elektrolytsystem nach einem oder mehreren der vorhergehenden Ansprüche, **dadurch gekennzeichnet, daß** der Gehalt von Carbamaten der Formel (I) 5 bis 100, vorzugsweise 20 bis 70, Vol.-% des gesamten Elektrolytsystems beträgt.

7. Elektrolytsystem nach einem oder mehreren der vorhergehenden Ansprüche, **dadurch gekennzeichnet, daß** es neben dem Gehalt an mindestens einem Carbamat der allgemeinen Formel (I) einen zusätzlichen Gehalt an Carbonaten, Estern, Lactonen und/oder Nitrilen, vorzugsweise Ethylencarbonat und/oder Propylencarbonat, aufweist.

8. Elektrolytsystem nach einem oder mehreren der vorhergehenden Ansprüche, **dadurch gekennzeichnet, daß** es mit SO₂ oder CO₂ gesättigt ist.

9. Elektrolytsysteme nach einem der vorhergehenden Ansprüche, **dadurch gekennzeichnet, daß** ein initialer Wassergehalt bis zu 10.000 ppm toleriert wird.

10. Sekundäre Lithiumbatterie mit erhöhter Sicherheit, **dadurch gekennzeichnet, daß** die Batterie ein Elektrolytsystem gemäß den Ansprüchen 1 bis 8 enthält.

11. Verfahren zur Erhöhung der Sicherheit einer sekundären Lithiumbatterie, **dadurch gekennzeichnet, daß** man als Elektrolyt ein System gemäß den Ansprüchen 1 bis 8 einsetzt.

12. Verwendung von Verbindungen der allgemeinen Formel (I) gemäß den Ansprüchen 1 bis 8 in Sicherheits-Elektrolytsystemen für Lithiumbatterien.

## Claims

1. Electrolyte system for lithium batteries of increased safety and comprising at least one lithium-containing conducting salt and at least one electrolyte fluid, **characterized by** an effective content of at least one partially fluorinated carbamate of general formula (I) 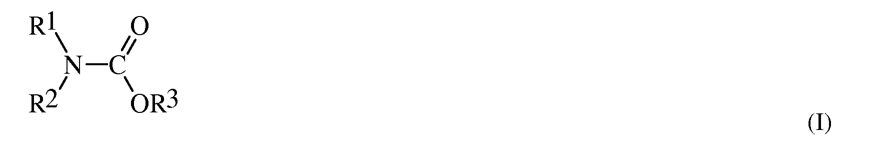 where
R¹ and R² independently of one another are identical or different, linear C₁-C₆-alkyl, branched C₃-C₆-alkyl, C₃-C₇-cycloalkyl or
R¹ and R² directly or via one or more additional nitrogen and/or oxygen atoms are linked to form a ring having from 3 to 7 ring members, and the additional nitrogen atoms present in the ring being saturated with C₁-C₃-alkyl and the ring carbon atoms possibly likewise carrying C₁₋C₃-alkyl, with the possibility of one or more hydrogen atoms in the radicals R¹ and R² being replaced by fluorine atoms,
R³ is a partially fluorinated or perfluorinated straight-chain alkyl group having from 1 to 6 carbon atoms, is a partially fluorinated or perfluorinated branched alkyl group having from 3 to 6 carbon atoms or a partially fluorinated cycloalkyl group having from 3 to 7 carbon atoms, which may or may not be monosubstituted or polysubstituted with C₁-C₆-alkyl.

2. Electrolyte system according to Claim 1, **characterized in that** R¹ and R² in formula I represents C₁-C₄-alkyl if linear, C₃-C₄-alkyl if branched, cyclopropyl, cyclobutyl, with the possibility of one or more hydrogen atoms having been replaced by fluorine atoms.

3. Electrolyte system according to Claim 1, **characterized in that** in formula I the radicals R¹ and R² are linked, directly or via an additional nitrogen atom or oxygen atom, to form a ring having 5 or 6 ring members.

4. Electrolyte system according to at least one of the preceding claims, **characterized in that** R³ is a partially fluorinated or perfluorinated straight-chain alkyl group having from 1 to 4 carbon atoms or a partially fluorinated or perfluorinated branched alkyl group having 3 or 4 carbon atoms.

5. Electrolyte system according to one or more of the preceding Claims 1 to 4, **characterized in that** the radical R³ has the composition CₙH₂ₙ₊₁₋ₘFₘ, where n = 1 to 6 and m = 1 to 13.

6. Electrolyte system according to one or more of the preceding claims, **characterized in that** the content of carbamates of formula (I) is from 5 to 100, preferably from 20 to 70, vol % of the total electrolyte system.

7. Electrolyte system according to one or more of the preceding claims, **characterized in that**, in addition to the content of at least one carbamate of general formula (I), it comprises an additional content of carbonates, esters, lactones and/or nitriles, preferably ethylene carbonate and/or propylene carbonate.

8. Electrolyte system according to one or more of the preceding claims, **characterized in that** it is saturated with SO₂ or CO₂.

9. Electrolyte systems according to any one of the preceding claims, **characterized in that** an initial water content of up to 10,000 ppm is tolerated.

10. Secondary lithium battery having increased safety, **characterized in that** the battery comprises an electrolyte system according to any of Claims 1 to 8.

11. Method for increasing the safety of a secondary lithium battery, **characterized in that** the electrolyte used is a system according to any of Claims 1 to 8.

12. Use of compounds of general formula (I) according to any of Claims 1 to 8 in safety electrolyte systems for lithium batteries.

## Revendications

1. Système électrolytique pour piles au lithium avec une sécurité augmentée, présentant au moins un sel conducteur contenant du lithium ainsi qu'au moins un liquide électrolytique, **caractérisé par** une teneur active en au moins un carbamate partiellement fluoré de formule générale (I) 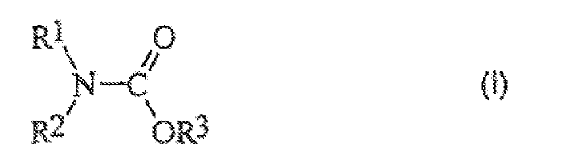 où
R¹ et R² sont, indépendamment l'un de l'autre, identiques ou différents et représentent C₁-C₆-alkyle linéaire, C₃-C₆-alkyle ramifié, C₃-C₇-cycloalkyle ou
R¹ et R² sont liés, directement ou via un ou plusieurs atomes de N et/ou de O supplémentaires, en un cycle comprenant 3 à 7 chaînons de cycle, les atomes de N supplémentaires éventuellement présents dans le cycle étant saturés par C₁-C₃-alkyle et les carbones du cycle pouvant également porter C₁-C₃-alkyle, où, dans les radicaux R¹ et R², un ou plusieurs atomes d'hydrogène peuvent être remplacés par des atomes de fluor,
R³ représente un groupe alkyle linéaire partiellement fluoré ou perfluoré comprenant 1 à 6 atomes de carbone, représente un groupe alkyle ramifié partiellement fluoré ou perfluoré comprenant 3 à 6 atomes de carbone, représente un groupe cycloalkyle partiellement fluoré comprenant 3 à 7 atomes de carbone, qui peut le cas échéant être monosubstitué ou polysubstitué par C₁-C₆-alkyle.

2. Système électrolytique selon la revendication 1, **caractérisé en ce que** dans la formule I, R¹ et R² signifient C₁-C₄-alkyle linéaire, C₃-C₄-alkyle ramifié, cyclopropyle, cyclobutyle, un ou plusieurs atomes d'hydrogène pouvant être remplacés par des atomes de fluor.

3. Système électrolytique selon la revendication 1, **caractérisé en ce que** dans la formule I, les radicaux R¹ et R² sont liés directement ou via un atome de N ou de O supplémentaire en un cycle comprenant 5 ou 6 chaînons de cycle.

4. Système électrolytique selon au moins l'une quelconque des revendications précédentes, **caractérisé en ce que** R³ représente un groupe alkyle linéaire partiellement fluoré ou perfluoré comprenant 1 à 4 atomes de carbone ou un groupe alkyle ramifié partiellement fluoré ou perfluoré comprenant 3 ou 4 atomes de carbone.

5. Système électrolytique selon l'une ou plusieurs des revendications précédentes 1 à 4, **caractérisé en ce que** le radical R³ présente la composition CₙH₂ₙ₊₁₋ₘFₘ, avec n = 1 à 6 et m = 1 à 13.

6. Système électrolytique selon l'une ou plusieurs des revendications précédentes, **caractérisé en ce que** la teneur en carbamates de formule (I) est de 5 à 100, de préférence de 20 à 70, % en volume de la totalité du système électrolytique.

7. Système électrolytique selon l'une ou plusieurs des revendications précédentes, **caractérisé en ce qu'**il présente, outre la teneur en au moins un carbamate de formule générale (I), une teneur supplémentaire en carbonates, esters, lactones et/ou nitriles, de préférence l'éthylènecarbonate et/ou le propylènecarbonate.

8. Système électrolytique selon l'une ou plusieurs des revendications précédentes, **caractérisé en ce qu'**il est saturé par SO₂ ou CO₂.

9. Systèmes électrolytiques selon au moins l'une quelconque des revendications précédentes, **caractérisés en ce qu'**une teneur en eau initiale de jusqu'à 10 000 ppm est tolérée.

10. Pile secondaire au lithium avec une sécurité augmentée, **caractérisée en ce que** la pile contient un système électrolytique selon les revendications 1 à 8.

11. Procédé pour augmenter la sécurité d'une pile secondaire au lithium, **caractérisé en ce qu'**on utilise comme électrolyte un système selon les revendications 1 à 8.

12. Utilisation de composés de formule générale (I) selon les revendications 1 à 8 dans des systèmes électrolytiques de sécurité pour piles au lithium.
